# EUROPÄISCHE PATENTANMELDUNG

(11) **EP 4 796 348 A1**
(43) Veröffentlichungstag der Anmeldung: **26.08.2026**
(21) Anmeldenummer: 26155292.1
(22) Anmeldetag: 30.01.2026
(51) Int. Cl.: B60C 9/00, D02G 3/48

(54) **FAHRZEUGREIFEN MIT KARKASSLAGE**

(30) Priorität: 19.02.2025 DE 102025106335
(71) Anmelder: Continental Reifen Deutschland GmbH, 30175 Hannover (DE)
(72) Erfinder: Kranich, Henrik, 30175 Hannover (DE); De Castro Pinho, Daniel, 30175 Hannover (DE)
(74) Vertreter: Continental Corporation

(57) **Zusammenfassung**

Die Erfindung betrifft einen Fahrzeugreifen in Radialbauart mit einer Radialkarkasse und mit zumindest einer Karkasslage aus in Gummi eingebetteten Stahlkorden (1) und mit Wulstbereichen mit Wulstkernen und Kernprofilen, um welche die Karkasslage Hochschläge bildend verläuft, wobei die Stahlkorde jeweils genau sechs gleichgroße Filamente (2) in einer Konstruktion 1 + 5 umfassen, wobei der Durchmesser (D1) der Stahlkorde maximal 0,75 mm beträgt, wobei unter dem Wulstkern die Stahlkorde in der Karkasslage mit mehr als 70 epdm, bevorzugt mehr als 80 epdm, bevorzugter mehr als 90 epdm angeordnet sind, wobei der Durchmesser (D2) jedes der sechs Filamente mindestens 0,15 mm und maximal 0,25 mm beträgt.

## Beschreibung

Die Erfindung betrifft einen Karkasskord für einen Fahrzeugreifen, eine Karkasse für einen Fahrzeugreifen, die den Kord enthält, und einen Fahrzeugreifen bevorzugt einen Nutzfahrzeugreifen, zum Beispiel für Lastkraftwagen, in Radialbauart mit der Karkasse.

Fahrzeugreifen, insbesondere Nutzfahrzeugreifen, weisen eine Radialkarkasse, insbesondere eine Stahlkordkarkasse, mit zumindest einer Karkasslage aus in Gummi eingebetteten Stahlkorden auf und weiterhin Wulstbereiche mit Wulstkernen und Kernprofilen, um welche die Karkasslage Hochschläge bildend verläuft.

Nutzfahrzeugreifen weisen in der Regel eine Querschnittshöhe von 120 mm bis 400 mm, insbesondere 175 mm bis 280 mm auf.

Nutzfahrzeugreifen weisen weiterhin bevorzugt einen Lastindex von 121 bis 160 auf.

Es ist üblich, in Nutzfahrzeugreifen der eingangs genannten Art - mit einer Querschnittshöhe von 120 mm bis 400 mm und einem Lastindex von 121 bis 160 - die Karkasslage mit Stahlkorden der Konstruktion 3 × 0,20 mm + 9 × 0,175 mm zu verstärken, wobei die Stahlfilamente eine Zugfestigkeit im NT (normal tensile, normale Zugfestigkeit) Bereich von 2700 N/mm2 bis 3050 N/mm2 aufweisen und unter dem Wulstkern mit 65 bis 80 epdm ("Enden pro Dezimeter", auch als "Fadendichte unter dem Wulstkern" oder "Fadendichte unter dem Kern" bezeichnet) angeordnet sind.

Die beschriebene Stahlkorde-Konstruktion verleiht der Karkasslage gute Festigkeitseigenschaften, hat jedoch den Nachteil, dass beim Einformen des fertig aufgebauten Rohreifens in eine Vulkanisationsform in den Schulterbereichen des Reifens ein Durchdrücken der Stahlkorde durch die Innenschicht stattfinden kann.

Weiterer Nachteil der Stahlkorde im Allgemeinen ist, dass sie eine bestimmte Mindestdicke der Gummierung der Karkasslage erforderlich machen, damit die Stahlkorde stabil in die Gummierung eingebettet werden können. Die Gummierung sollte in etwa 150 % bis 200 % der Dicke bzw. des Durchmessers der verwendeten Stahlkorde aufweisen.

Üblicherweise haben verwendete Korde einen Durchmesser von 0,75 bis 1,0 mm, um die relevante Festigkeit der Karkasslage bzw. des Reifens zu erreichen. Eine entsprechend hohe Gummidicke der Karkasslage geht mit hohem Rollwiderstand einher.

Andererseits muss genügend Gummi zwischen die Filamente der Stahlkorde gelangen können, um ein Aneinanderreiben der Filamente in den Stahlkorden und somit eine schnelle Abnutzung und frühe Ermüdung der Stahlkorde zu vermeiden. Um diesen Zweck zu erreichen, werden im Stand der Technik, wie z.B. in der Anmeldung US 2019 0152261 A1, in der Regel verschiedene Filamentdurchmesser gewählt, was jedoch die Prozessierbarkeit während der Fertigung erschwert.

Der Erfindung liegt die Aufgabe zugrunde, die Nachteile des Standes der Technik zu überwinden.

Die gestellte Aufgabe wird erfindungsgemäß dadurch gelöst, indem Stahlkorde für eine Karkasslage eines Reifens bereitgestellt werden, die nur genau sechs Filamente aufweisen. Die Stahlkorde weisen dabei einen maximalen Durchmesser von 0,75 mm, bevorzugt von maximal 0,69 mm, besonders bevorzugt von maximal 0,66 mm auf.

Durch einen so geringen Durchmesser kann die erforderliche Gummidicke für den Stahlkord signifikant reduziert werden.

Dies schont Ressourcen und spart Herstellungskosten, führt aber vor allem auch zu einem vorteilhaft geringen Rollwiderstand des Reifens, indem die Stahlkorde verwendet werden.

Die Filamente können in den Stahlkorden gemäß der Konstruktion 1 + 5 angeordnet sein, wobei fünf äußere Filamente (Lagenfilamente) gleichmäßig um ein zentrales Filament (Kernfilament) gewickelt sind.

Die Schlaglänge, mit welcher die Lagenfilamente um das Kernfilament gewickelt sind, beträgt bevorzugt zwischen 6 mm und 14 mm, bevorzugter zwischen 8 mm und 13 mm.

Gerade die Verwendung solcher Stahlkorde ist gemeinsam mit einer Anordnung unter bestimmten gegenseitigen Abständen besonders gut dafür geeignet, ein Durchdrücken der Stahlkorde in den Schulterbereichen des Reifens beim Einformen in die Reifenvulkanisationsform zu verhindern.

Im Vergleich zu einer 1 + 6 Anordnung mit sieben Filamenten hat die vorliegende Ausführungsform weiterhin den Vorteil, dass die hier vorliegenden fünf Lagenfilamente vorteilhaft so angeordnet werden können, dass während des Kalandrierens genügend Gummimasse zwischen die einzelnen Filamente, sowohl zwischen die einzelnen Lagenfilamente wie auch zwischen Lagenfilamente und Kernfilament gelangt, sodass Reibungseffekte zwischen den Filamenten und daraus resultierende Ermüdungseffekte reduziert werden.

Die Durchmesser der Filamente sind bevorzugt alle gleich, wobei die Filamente bevorzugt einen Durchmesser von mindestens 0,15 mm aufweisen und bevorzugt einen Durchmesser von maximal 0,25 mm aufweisen.

Bevorzugt beträgt der mindeste Durchmesser der Filamente 0,19 mm.

Das Verwenden von ausschließlich einem Filamenttyp ermöglicht ein einfaches Prozessieren während der Herstellung des Stahlkords.

Umso kleiner der Durchmesser der Filamente, desto kleiner der Gesamtdurchmesser des Stahlkordes.

Durch das Verwenden dünner Filamente kann somit die Menge an verwendetem Gummi weiter reduziert werden, was sich u.a. vorteilhaft auf den Rollwiderstand des entsprechenden Reifens (siehe oben) auswirkt. Jedoch steigen mit geringerem Stahlfilamentdurchmessern die Anforderungen an die Festigkeit des Stahls der Filamente. Weiterhin ist auch die Sprödigkeit der Filamente zu beachten. Die Steifigkeit des Kordes sinkt in der Regel bei Verwendung dünnerer Filamente.

Dies kann bei einem Abwägen der Erfordernisse bezüglich der Stahleigenschaften der Filamente und dem Ziel einer Reduzierung des Gummivolumens zu einem wie folgt ausgewählten bevorzugten Durchmesser der verwendeten Stahlfilamente führen.

Ein bevorzugter Filamentdurchmesser beträgt mindestens 0,22 mm, besonders bevorzugt mindestens 0,23 mm und maximal 0,25 mm. So kann die Prozessierbarkeit während der Herstellung des Kords erleichtert werden.

Aufgrund des geringen Durchmessers der Filamente und der dargestellten Konstruktion resultiert der geforderte geringe Durchmesser der Korde.

Um eine ausreichende Beständigkeit zu gewährleisten, umfassen die erfindungsgemäßen Stahlfilamente bevorzugt einen Stahl oder Stähle oder bestehen aus diesen, das oder die eine Zugfestigkeit im NT-, HT- oder ST-Bereich aufweisen, also im normal tensile, high tensile oder super-high tensile Bereich (normale, hohe oder super-hohe Zugfestigkeit) von bevorzugt über 3300 MPa bis 3800 MPa. Solche Stähle weisen im Vergleich zu Stählen mit höheren Zugfestigkeiten vorteilhafterweise eine geringere Sprödigkeit und höhere Dauerhaltbarkeit auf.

Für Filamente mit dem minimalen Durchmesser von 0,15 mm ergibt sich somit eine maximale gewünschte Zugfestigkeit von 3800 N/mm2 (=MPa). Für Filamente mit größeren Durchmesser genügen Stähle mit geringerer maximaler Zugfestigkeit. Die gewünschte maximale Zugfestigkeit in MPa lässt sich in Abhängigkeit vom Filamentdurchmesser d in mm nach folgender Formel berechnen:$Maximale Zugfestigkeit \left[MPa\right] = 4100 - \left(2000*d\left[mm\right]\right)$

Um die Dauerhaltbarkeit weiter zu erhöhen bzw. die Sprödigkeit zu verringern werden bevorzugt nur Stähle im NT- oder HT- Bereich eingesetzt.

Für Filamente mit dem minimalen Durchmesser von 0,15 mm ergibt sich somit eine maximale gewünschte Zugfestigkeit von 3500 N/mm2 (=MPa). Für Filamente mit größeren Durchmesser genügen Stähle mit geringerer maximaler Zugfestigkeit. Die gewünschte maximale Zugfestigkeit in MPa lässt sich in Abhängigkeit vom Filamentdurchmesser d in mm nach folgender Formel berechnen:$Maximale Zugfestigkeit \left[MPa\right] = 3800 - \left(2000*d\left[mm\right]\right)$

Um die Dauerhaltbarkeit noch weiter zu erhöhen bzw. die Sprödigkeit noch weiter zu verringern werden weiter bevorzugt nur Stähle im NT-Bereich eingesetzt.

Die Verwendung von Stählen mit höherer Zugfestigkeit hat hingegen den Vorteil, dass die Filamente eine höhere Festigkeit aufweisen.

Um eine hohe Festigkeit und damit eine hohe Robustheit zu gewährleisten, umfassen die Stahlfilamente gemäß einer Ausführungsform der Erfindung einen Stahl oder Stähle oder bestehen aus diesen, das oder die eine Zugfestigkeit im UT- bis MT-Bereich, also im ultra-high tensile bis mega-high tensile Bereich (ultra-hohe bis mega-hohe Zugfestigkeit) von über 3800 N/mm2 und bevorzugt über 4100 N/mm2 bis zu 4500 N/mm2 aufweisen.

Die erforderliche Zugfestigkeit in MPa für ein UT-Stahl lässt sich in Abhängigkeit vom Filamentdurchmesser d in mm nach folgender Formel berechnen:$Maximale Zugfestigkeit \left[MPa\right] = 4400 - \left(2000*d\left[mm\right]\right)$

Die erforderliche Zugfestigkeit in MPa für ein MT-Stahl lässt sich in Abhängigkeit vom Filamentdurchmesser d in mm nach folgender Formel berechnen:$Maximale Zugfestigkeit \left[MPa\right] = 4800 - \left(2000*d\left[mm\right]\right)$

Umso dünner das Filament, desto höher ist bevorzugt die Zugfestigkeit des verwendeten Stahls.

Die lineare Dichte der verwendeten Stahlfilamente beträgt bevorzugt zwischen 77 g/100m (Gramm pro 100 m Filament) und 247 g/100 m, wobei die Filamentdurchmesser zwischen 0,15 mm und 0,25 mm variieren.

Eine Zugdichte der Filamente beträgt somit bevorzugt zwischen 13 und 58 MPa/(g/100m).

Für die Erfindung verwendete HT/ST/UT-Stähle sind insbesondere bevorzugt durch einen Kohlenstoffanteil von 0,6 % bis 1,1 % im Stahl, im besonderen Fall von verwendeten UT-Stählen von mindestens 0,75 %, bevorzugt mindestens 0,80 % charakterisiert.

Die Drähte sind bevorzugt mit einer Legierung umfassend Kupfer und Zink, oder Kupfer, Zink und Eisen beschichtet. Die Legierungen können aus den genannten Metallen bestehen, wobei in einer binären Beschichtung der Anteil an Kupfer bevorzugt zwischen 61 % und 66 % und der Anteil an Zink bevorzugt zwischen 29 % und 34 % (Massen-%) beträgt.

Die Anwendung von HT/ST/UT-Stählen für Filamente von Karkasskorden ermöglicht die Bereitstellung der vorteilhaft dünnen Korde mit den geforderten hohen Zugfestigkeiten zur Anwendung in großen Nutzfahrzeugreifen wie einführend definiert.

Die beschriebenen Korde erfüllen insbesondere die Voraussetzungen zur Verwendung in Nutzfahrzeugreifen mit Felgendurchmessern von 17,5 Zoll bis 22,5 Zoll (auch "inch"; = 17,5" und 22,5" Reifen), bevorzugt 19,5 Zoll ( = 19,5") bis 22,5 Zoll.

Die Anwendung in größeren Reifen erfordert eine höhere Festigkeit und die Anwendung festerer Stähle bzw. von einer höheren Anzahl an Korden.

In einer erfindungsgemäßen Karkasslage sind die erfindungsgemäßen Stahlkorde zur Verstärkung, bevorzugt mit mehr als 70 epdm, bevorzugt mehr als 80 epdm, mehr bevorzugt mehr als 90 epdm unter dem Wulstkern, angeordnet. Dabei beträgt der Felgendurchmessern bevorzugt 19,5 Zoll bis 22,5 Zoll.

Die erfindungsgemäße hohe Zahl der Korde in der Karkasslage wird durch die erfindungsgemäß bereitgestellten dünnen Korde mit geringer Filamentzahl und geringen Durchmessern ermöglicht.

Die hohe Zahl der Korde mit jeweils hoher Zugfestigkeit stellt eine ausreichende Festigkeit, Stabilität und Lebensdauer der Karkasse sicher, die aufgrund der geringen Durchmesser der Korde gleichzeitig vorteilhaft dünn ausgeführt sein kann.

Mit dem Korddurchmesser skaliert die benötigte Gummierungsdicke und somit die Gummimenge beim Kalandrieren der Karkasslage. Durch die Verwendung der erfindungsgemäßen Stahlkorde (wie beschrieben) kann die Gummierungsdicke signifikant gesenkt werden, ohne dass sich die Reifeneigenschaften verschlechtern. Der Rollwiderstand eines entsprechenden Reifens kann reduziert werden.

Gleichzeitig wird durch die erfindungsgemäße Anordnung der Filamente (1 + 5) eine ausreichende Gummierungsdicke zwischen den Stahlfilamenten sichergestellt. Somit wird eine schnelle Materialermüdung der Korde vermieden.

Der Einsatz sechs typgleicher Filamente erleichtert weiterhin den Herstellungsprozess der Karkasskorde.

Ein erfindungsgemäßer Reifen enthält die erfindungsgemäße Karkasslage mit den erfindungsgemäßen Korden.

Eine erfindungsgemäß verringerte Gummimenge bzw. Gummidicke in der Karkasslage führt vorteilhaft zu einer Verbesserung des Rollwiderstandsverhaltens des erfindungsgemäßen Reifens, dass heißt der Rollwiderstand sinkt.

Ein verringerter Rollwiderstand korreliert vorteilhafterweise auch mit einem geringeren Energieverbrauch durch Reibungsverluste des erfindungsgemäßen Reifens und ermöglicht somit Treibstoffeinsparung.

Weiterhin führt eine verringerte Menge an Gummi zu einer vorteilhaften Reduktion des Gummibedarfs und somit zu geringeren Herstellungskosten und einer höheren Nachhaltigkeit des Reifens.

Die bevorzugten Merkmale sind nicht einschränkend. Die bevorzugten Merkmale können die Filamente, den Stahlkord, die Karkasse mit dem Stankord oder den erfindungsgemäßen Reifen betreffen.

Bevorzugt wird der erfindungsgemäße Stahlkord in der Karkasslage eines Nutzfahrzeugreifens, insbesondere eines LKW-Reifens eingesetzt. Es ist jedoch auch der Einsatz in anderen Fahrzeugreifen, beispielsweise PKW (Personenkraftwagen)-Reifen möglich.

Bei dem LKW-Reifen, in dem der erfindungsgemäße Stahlkord in der Karkasslage eingesetzt wird, handelt es sich bevorzugt um einen Reifen mit Stahlkarkasse, der weiterhin für einen Innendruck zwischen 6 und 10 bar, besonders bevorzugt für mindestens 9 bar Innendruck ausgelegt ist.

Die vorliegende Erfindung kann gemäß eines weiteren Aspekts auch auf Fahrzeugreifen für Personenkraftwagen (PKW) in Radialbauart mit einer Radialkarkasse angewandt werden. Alle zuvor beschriebenen Merkmale gelten analog, sofern sie nicht explizit LKW-Reifen betreffen.

Aufgrund des geringeren Reifen-Innendrucks von PKW-Reifen kann bei PKW-Reifen jedoch eine geringere Anzahl an Stahlkorden verwendet werden als zuvor für LKW-Reifen beschrieben.

Die mindestens benötigten Enden pro Dezimeter (an Stahlkorden) unter dem Wulstkern EPDM_PKW können erfindungsgemäß nach folgender Formel berechnet werden: $EPDM_PKW > \left\{\left[\left(Innendruck des Fahrzeugreifens\right)/9bar\right]*90 epdm\right\} .$

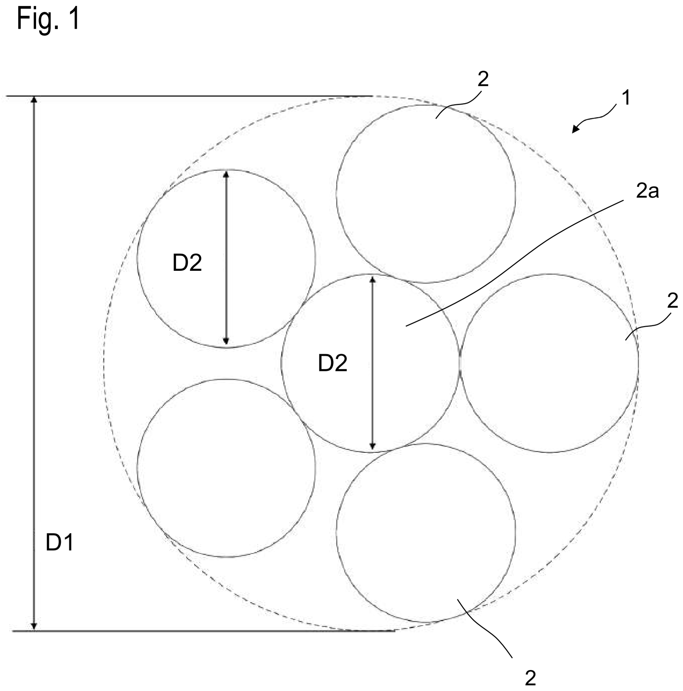

Weitere Merkmale, Vorteile und Einzelheiten der Erfindung (insbesondere des ersten Aspekts) werden nun anhand der Figur 1, welche schematisch einen Querschnitt einer Ausführungsvariante eines für eine Karkasslage eines Nutzfahrzeugreifens vorgesehenen Stahlkordes zeigt, näher beschrieben.

Der Nutzfahrzeugreifen weist die üblichen Bauteile auf, wie einen profilierten Laufstreifen, einen mehrlagigen, insbesondere mit Stahlkorden verstärkten Gürtelverband, eine Innenschicht, Wulstbereiche mit Wulstkernen und Kernprofilen sowie eine Radialkarkasse aus zumindest einer mit Stahlkorden verstärkten Karkasslage. Die Stahlkorde der Karkasslage verlaufen in den Seitenwänden in radialer Richtung, radial unterhalb des Laufstreifens und des Gürtels in axialer Richtung (also in anderen Worten: näher an der Reifenachse als der Laufstreifen).

Figur 1 zeigt einen Querschnitt eines zum Einsatz in der Karkasslage erfindungsgemäß ausgeführter Nutzfahrzeugreifen besonders geeigneten Stahlkordes 1, welcher die Konstruktion (1 + 5) x0.23 HT/ST/UT und dementsprechend sechs gleichdimensionierte und umeinander geschlagene Filamente 2 aufweist, wobei das zentrale Filament ohne Schlag verarbeitet wird. Die übrigen fünf Lagenfilamente werden um das Kernfilament 2a herumgewickelt.

Der Durchmesser D2 jedes der Filamente beträgt im Beispiel definitionsgemäß 0,23 mm.

Die Filamente 2 sind in bekannter Weise mit einer Schlaglänge von 6,0 mm bis 14,0 mm, vorzugsweise von etwa 12,0 mm bis 13,0 mm, verdrillt.

Die Filamente bestehen aus Stahl der Festigkeitsklassen HT, ST oder UT und weisen eine Zugfestigkeit von mehr als 3300 N/mm2 auf. Bei einer bevorzugten Ausführung weisen die Filamente 2 eine Zugfestigkeit von mindestens 3500 N/mm2 auf.

Die Filamente 2 weisen jeweils einen im Wesentlichen kreisförmigen oder genau kreisförmigen Querschnitt auf.

Der Gesamtdurchmesser D1 des gebildeten Kords beträgt im Beispiel maximal 0,69 mm, nämlich z.B. genau 0,69 mm.

Zur Herstellung einer solche Stahlkorde aufweisenden Karkasslage werden die Stahlkorde durch Kalandrieren in eine der üblichen Gummierungsmischungen eingebettet, wobei in der nicht vulkanisierten kalandrierten Karkasslage die Anzahl der Stahlkorde über 70, bevorzugt über 80, bevorzugter über 90 epdm beträgt.

Im fertig hergestellten, vulkanisierten Nutzfahrzeugreifen beträgt die Anzahl der Stahlkorde unter dem Wulstkern ebenso über 70, bevorzugt über 80, bevorzugter über 90.

### Bezugszeichenliste

1 Stahlkord
2 Filament
2a Kernfilament
D1 Korddurchmesser
D2 Filamentdurchmesser

## Patentansprüche

1. Fahrzeugreifen in Radialbauart mit einer Radialkarkasse und mit zumindest einer Karkasslage aus in Gummi eingebetteten Stahlkorden (1) und mit Wulstbereichen mit Wulstkernen und Kernprofilen, um welche die Karkasslage Hochschläge bildend verläuft, wobei die Stahlkorde jeweils genau sechs gleichgroße Filamente (2) in einer Konstruktion 1 + 5 umfassen, wobei der Durchmesser (D1) der Stahlkorde maximal 0,75 mm beträgt, wobei unter dem Wulstkern die Stahlkorde in der Karkasslage mit mehr als 70 epdm, bevorzugt mehr als 80 epdm, bevorzugter mehr als 90 epdm angeordnet sind, wobei der Durchmesser (D2) jedes der sechs Filamente mindestens 0,15 mm und maximal 0,25 mm beträgt.

2. Fahrzeugreifen nach Anspruch 1, wobei der Durchmesser jedes der Filamente mindestens 0,19 mm, bevorzugt mindestens 0,22 mm, besonders bevorzugt mindestens 0,23 mm beträgt.

3. Fahrzeugreifen nach einem der Ansprüche 1 oder 2, wobei der Durchmesser der Stahlkorde maximal 0,69 mm, bevorzugter maximal 0,66 mm beträgt.

4. Fahrzeugreifen nach einem der Ansprüche 1 bis 3, wobei das in den Stahlkorden verwendete Stahl ein normal-tensile, high-tensile oder super-high-tensile Stahl ist, das bevorzugt eine Zugfestigkeit zwischen 3300 N/mm2 und 3800 N/mm2 aufweist.

5. Fahrzeugreifen nach einem der Ansprüche 1 bis 3, wobei das in den Stahlkorden verwendete Stahl ein ultra-high tensile oder mega-high tensile Stahl ist, das eine Zugfestigkeit bis maximal 4500 N/mm2 aufweist.

6. Fahrzeugreifen nach einem der Ansprüche 1 bis 5, wobei das in den Stahlkorden verwendete Stahl ein high tensile Stahl ist, das einen Kohlenstoffgehalt von einschließlich 0,6 % bis einschließlich 1,1 % aufweist, oder wobei das in den Stahlkorden verwendete Stahl ein ultra-high tensile Stahl ist, das einen Kohlenstoffgehalt von einschließlich 0,75 %, bevorzugt von einschließlich 0,8 %, bis einschließlich 1,1 % aufweist.

7. Fahrzeugreifen nach einem der Ansprüche 1 bis 6, wobei der Felgendurchmesser der Fahrzeugreifen mindestens 17,5 Zoll, bevorzugt mindestens 19,5 Zoll, und weiterhin bis maximal 22,5 Zoll beträgt.

8. Fahrzeugreifen nach einem der Ansprüche 1 bis 7, wobei der Fahrzeugreifen eine Querschnittshöhe von 120 mm bis 280 mm und einen Lastindex von 121 bis 160 aufweist.

9. Fahrzeugreifen nach einem der Ansprüche 1 bis 8, wobei der Fahrzeugreifen ein Nutzfahrzeugreifen ist.

10. Verwendung von Stahlkorden (1) zur Verstärkung von Karkasslagen von Fahrzeugreifen, die jeweils genau sechs gleichgroße Filamente (2) in der Konstruktion 1 + 5 umfassen, wobei der Durchmesser (D1) der Stahlkorde maximal 0,75 mm beträgt, wobei das in den Stahlkorden verwendete Stahl ein high tensile oder ein ultra-high tensile Stahl ist.

11. Fahrzeugreifen für Personenkraftwagen in Radialbauart mit einer Radialkarkasse und mit zumindest einer Karkasslage aus in Gummi eingebetteten Stahlkorden (1) und mit Wulstbereichen mit Wulstkernen und Kernprofilen, um welche die Karkasslage Hochschläge bildend verläuft, wobei die Stahlkorde jeweils genau sechs gleichgroße Filamente (2) in der Konstruktion 1 + 5 umfassen, wobei der Durchmesser (D1) der Stahlkorde maximal 0,75 mm beträgt, wobei das in den Stahlkorden verwendete Stahl ein high tensile oder ein ultra-high tensile Stahl ist und wobei unter dem Wulstkern die Stahlkorde in der Karkasslage mit einer Anzahl EPDM_PKW angeordnet sind, wobei gilt: $EPDM_PKW > \left\{\left[\left(Innendruck des Fahrzeugreifens\right) / 9bar\right]* 90 epdm\right\} .$
